# EUROPEAN PATENT SPECIFICATION

(11) **EP 3 662 757 B1**
(45) Date of publication and mention of the grant of the patent: **14.06.2023**
(21) Application number: 18841300.9
(22) Date of filing: 23.07.2018
(51) Int. Cl.: A23D 9/00, A23G 1/00, A23D 9/04, A23G 1/32, A23G 1/38, C11C 3/10, C11C 3/12

(54) **OIL/FAT COMPOSITION AND OILY FOOD COMPRISING OIL/FAT COMPOSITION**
ÖL-/FETT-ZUSAMMENSETZUNG UND ÖLIGES NAHRUNGSMITTEL MIT ÖL-/FETT-ZUSAMMENSETZUNG
COMPOSITION D'HUILE/DE GRAISSE ET ALIMENT HUILEUX COMPRENANT CETTE COMPOSITION D'HUILE/DE GRAISSE

(30) Priority: 01.08.2017 JP 2017149008; 03.07.2018 JP 2018126893
(43) Date of publication of application: 10.06.2020
(73) Proprietor: The Nisshin OilliO Group, Ltd., Tokyo 104-8285 (JP)
(72) Inventor: SUZUKI Chie, Yokohama-shi Kanagawa 235-8558 (JP); MURAKAMI Sachiko, Yokohama-shi Kanagawa 235-8558 (JP); AIBARA Tomohiro, Yokohama-shi Kanagawa 235-8558 (JP); TERAI Hiroaki, Yokohama-shi Kanagawa 235-8558 (JP); TSUKIYAMA Muneo, Yokohama-shi Kanagawa 235-8558 (JP); OONISHI Kiyomi, Yokohama-shi Kanagawa 235-8558 (JP)
(74) Representative: Becker, Eberhard
(86) International application number: PCT/JP2018/027515
(87) International publication number: WO 2019/026670

(56) References cited:
- WO-A1-2008/029642
- WO-A1-2014/034601
- WO-A1-2016/190295
- WO-A1-2016/204187
- WO-A1-2017/073480
- WO-A1-2017/094818
- JP-A- H01 252 251
- JP-A- 2008 161 106
- JP-A- 2013 215 176
- JP-B2- 3 635 679
- US-A1- 2016 213 020

## Description

### [Technical Field]

The present invention relates to an oil and fat composition and oily food including the oil and fat composition.

### [Background Art]

Examples of oily foods in which fats and oils are in a continuous phase include chocolate, fat cream, butter cream, margarine, and spread. Generally, shape retention of oily foods is mostly maintained by fats and oils. That is, a crystal structure of fats and oils forming a continuous phase greatly influences physical properties and quality of oily foods.

For example, temper type chocolate fats and oils are composed of cocoa butter having a symmetric triacylglycerol structure or fats similar to cocoa butter. When temper type chocolates are produced, a very complicated temperature control operation called tempering is performed. According to tempering, crystals of symmetric triacylglycerol constituting fats and oils are adjusted to Form V which is a stable form. When the crystal form of fats and oils is adjusted to Form V, chocolates having good mold releasing and gloss are obtained.

However, when unstable fat and oil crystals are produced due to insufficient tempering and some of chocolates are melted and then solidified again due to change in temperature, the crystal form of chocolate fats and oils may change from Form V to Form VI. When the crystal form of chocolate fats and oils change from Form V to Form VI, chocolates may be in a state in which white powder is blown (so-called bloom). Therefore, in order to maintain quality of chocolates, it is important to maintain the crystal form of fats and oils in Form V.

In order to prevent chocolate bloom, in Japanese Patent Laid-Open No. S62-6635, a fat bloom preventing agent including a mixed acid group triglyceride including at least one or more of each of a saturated fatty acid residue having 20 to 24 carbon atoms and an unsaturated fatty acid residue having 16 to 22 carbon atoms in one molecule is described. The fat bloom preventing agent is effective to some extent against bloom that occurs when chocolate partially melts and then solidifies again. However, its effect was still insufficient.

In addition, plastic oil and fat compositions such as margarine and spread are oily foods having a relatively high content of liquid oil. In the plastic oil and fat compositions, fat and oil crystals immediately after production are in a fine state. However, polymorphic change occurs in fat and oil crystals due to the change in temperature or the like. Fat and oil crystals become coarse and produce grains according to the polymorphic change in some cases. Therefore, in order to maintain quality of the plastic oil and fat composition, it is important to maintain fat and oil crystals in a fine state.

Furthermore, WO 2016/204187 A1 addresses the problem of providing nontempered type chocolate which is excellent in glossy sheen and which suffers less degradation in glossy sheen over time and describes a chocolate product containing a fat made by transesterifying an MCT oil and rapeseed oil, and later hardening the result, thus obtaining a hardened interesterified fat from MCT oil and rapeseed oil, wherein the fat product is suitable as blooming and grain formation-suppressing agent.

Additionally, WO 2016/190295 addresses the problem of providing a chocolate of which the tempering can be easily controlled even though the chocolate contains a blooming resistance improver, etc. in fat(s) and/or oil(s) and discloses a chocolate product containing a fat made by transesterifying an MCT oil and hardened rapeseed oil, wherein the fat product is used to suppress blooming and grain-formation.

WO 2017/073480 A1 discloses a chocolate product containing a fat made by transesterifying an MCT oil and rapeseed oil, and later hardening the result, thus obtaining a hardened interesterified fat from MCT oil and rapeseed oil, wherein the fat product is used to suppress blooming and grain-formation.

In order to prevent graining of plastic oil and fat compositions, in Japanese Patent Laid-Open No. H5-311190, a fat and oil graining preventing agent (A2B) including triglycerides in which one constituent fatty acid is a saturated fatty acid (B) having 12 or less carbon atoms and the remaining two fatty acids are a saturated fatty acid (A) having 16 or more carbon atoms is described. The graining preventing agent is effective to some extent for preventing grain generation. However, its effect was still insufficient.

### [Citation List]

### [Patent Literature]

[Patent Literature 1]
   Japanese Patent Laid-Open No. S62-6635
[Patent Literature 2]
   Japanese Patent Laid-Open No. H5-311190

### [Summary of Invention]

### [Technical Problem]

An objective of the present invention is to provide a composition having a blooming and grain formation-suppressing effect in which bloom and grain formation caused by fats and oils contained in an oily food are effectively suppressed.

### [Solution to Problem]

The inventors conducted extensive studies, and as a result, found that an oil and fat composition containing a specific triacylglycerol as a constituent component has a highly effective oily food bloom and grain suppressing effect. Thereby, the present invention is completed. That is, the present invention includes the following aspects.

The invention is set out in the appended set of claims.

### [Advantageous Effects of Invention]

According to the present invention, it is possible to provide an oil and fat composition which effectively suppresses bloom and grain formation caused by fats and oils contained in an oily food. In addition, it is possible to provide an oily food in which bloom and grain formation is suppressed.

### [Description of Embodiments]

The following embodiment is not according to the invention and is present for illustration purposes only. An oil and fat composition described herein satisfies the following requirements (a) to (c).
(a) The content of C24 to 30 is 0.5 to 12 mass%.
(b) The total content of HMM, HLM, and HLL is 17 to 50 mass%.
(c) The total content of HHM and HHL is 17 to 40 mass%.

The described oil and fat composition includes 0.5 to 12 mass% of C24 to 30 (requirement (a)). Here, C24 to 30 refer to triacylglycerol in which the total number of carbon atoms of 3 molecules of fatty acid bonded to glycerol is 24 to 30. For example, tricaprylin is a triacylglycerol in which 3 molecules of capric acid are ester-bonded to glycerol, and the total number of carbon atoms of fatty acids is 24. Similarly, tricaprin has a total number of carbon atoms of fatty acids of 30. For example, the oil and fat composition includes 2 mass% of tricaprylin and 3 mass% of tricaprin, C24 to 30 of the oil and fat composition is 5 mass%. The C24 to 30 constituent fatty acids are preferably a combination of saturated fatty acids having 8 to 12 carbon atoms.

The described oil and fat composition includes a total content of 17 to 50 mass% of HMM, HLM, and HLL (requirement (b)). In the present invention, M refers to a saturated fatty acid having 8 to 10 carbon atoms. L refers to a lauric acid. H refers to a saturated fatty acid having 14 or more carbon atoms. HMM refers to a triacylglycerol in which 1 molecule of H and 2 molecules of M are ester-bonded to glycerol. HLM refers to a triacylglycerol in which each 1 molecule of H, L and M is ester-bonded to glycerol. HLL refers to a triacylglycerol in which 1 molecule of H and 2 molecules of L are ester-bonded to glycerol. In HMM, HLM, and HLL, bonding positions of constituent fatty acids on glycerol are arbitrary. Thus, H is preferably a saturated fatty acid having 14 to 22 carbon atoms, and more preferably a saturated fatty acid having 14 to 18 carbon atoms. M and H are preferably linear.

The oil and fat composition of the present invention includes a total content of 17 to 40 mass% of HHM and HHL (requirement (c)). In the present invention, HHM refers to a triacylglycerol in which 2 molecules of H and 1 molecule of M are ester-bonded to glycerol. HHL refers to a triacylglycerol in which 2 molecules of H and 1 molecule of L are ester-bonded to glycerol. In HHM and HHL, bonding positions of constituent fatty acids on glycerol are arbitrary.

In the oil and fat composition of the present invention, the total content of the above C24 to 30, HMM, HLM, HLL, HHM and HHL is preferably 40 to 90 mass%, and more preferably 45 to 85 mass%. In addition, in the oil and fat composition of the present invention, the content of HLM is larger than the content of HMM (HLM>HMM). When the triacylglycerol contained in the oil and fat composition of the present invention satisfies the above requirements (a) to (c), in an oily food obtained using the oil and fat composition of the present invention, bloom and grain formation caused by fats and oils contained in the oily food are effectively suppressed. This effect is particularly noticeable in an oily food rich in liquid oil.

Here, the content of triacylglycerol contained in the oil and fat composition can be measured according to, for example, a gas chromatographic method (JAOCS, vol70, 11, 1111-1114 (1993)). As necessary, a calculation method known in the related art may be applied.

The following embodiment is not according to the invention and is present for illustration purposes only. The oil and fat composition may be an oil and fat composition according to the following first aspect. The content of C24 to 30 (requirement (al)) contained in the oil and fat composition according to the first aspect is 2 to 12 mass%, preferably 3 to 11 mass%, more preferably 4 to 10 mass%, still more preferably 4 to 9 mass%, and most preferably 4 to 7 mass%. In addition, the total content of HMM, HLM, and HLL (requirement (b1)) contained in the oil and fat composition according to the first aspect is 30 to 50 mass%, preferably 33 to 47 mass%, and more preferably 35 to 45 mass%. In addition, the total content of HHM and HHL (requirement (c1)) contained in the oil and fat composition according to the first aspect is 20 to 40 mass%, preferably 25 to 40 mass%, and more preferably 28 to 38 mass%.

In the oil and fat composition (not in accordance with the present invention and present for illustration purposes only) , preferably, the content of HLM is larger than the content of HMM (HLM>HMM), and larger than the content of HLL (HLM>HLL). In addition, the content of HLM contained in the oil and fat composition according to the first aspect is preferably 12 mass% or more, more preferably 14 to 26 mass%, and most preferably 16 to 23 mass%. In addition, in the oil and fat composition according to the first aspect, preferably, the content of HHL is larger than the content of HHM (HHL>HHM). In addition, in the oil and fat composition according to the first aspect, the total content of C24 to 30, HMM, HLM, HLL, HHM and HHL is preferably 65 to 90 mass%, and more preferably 70 to 85 mass%.

The oil and fat composition of the present invention is an oil and fat composition according to the following second aspect. The content of C24 to 30 (requirement (a)) contained in the oil and fat composition according to the present invention is 0.5 to 10 mass%, preferably 0.5 to 8 mass%, more preferably 0.5 to 6 mass%, and most preferably 0.5 to 4 mass%. In addition, the total content of HMM, HLM, and HLL (requirement (b)) contained in the oil and fat composition according to the present invention is 17 to 40 mass%, preferably 19 to 37 mass%, and more preferably 20 to 36 mass%. In addition, the total content of HHM and HHL (requirement (c)) contained in the oil and fat composition according to the present invention is 17 to 40 mass%, preferably 19 to 36 mass%, and more preferably 21 to 34 mass%.

In the oil and fat composition according to the present invention, the content of HLM is larger than the content of HMM (HLM>HMM). In addition, the content of HLM contained in the oil and fat composition according to the present invention is preferably 6 to 20 mass%, more preferably 7 to 20 mass%, and most preferably 7 to 18 mass%. In addition, in the oil and fat composition according to the present invention, preferably, the content of HHL is larger than the content of HHM (HHL>HHM). In addition, in the oil and fat composition according to the present invention, the total content of C24 to 30, HMM, HLM, HLL, HHM and HHL is 40 to 80 mass%, and preferably 45 to 75 mass%.

The oil and fat composition according to the present invention includes a total content of 2 to 16 mass% of HUM and HUL (requirement (d)). In the present invention, U refers to an unsaturated fatty acid having 16 or more carbon atoms. HUM refers to a triacylglycerol in which each 1 molecule of H, U and M is ester-bonded to glycerol. HUL refers to a triacylglycerol in which each 1 molecule of H, U and L is ester-bonded to glycerol. In HUM and HUL, bonding positions of constituent fatty acids on glycerol are arbitrary. Thus, U is preferably an unsaturated fatty acid having 16 to 22 carbon atoms, and more preferably an unsaturated fatty acid having 16 to 18 carbon atoms. U is preferably linear. The total content of HUM and HUL contained in the oil and fat composition of the present invention is preferably 3 to 16 mass%, and more preferably 4 to 15 mass%. In addition, in the oil and fat composition according to the present invention, preferably, the content of HUL is larger than the content of HUM (HUL>HUM).

In the oil and fat composition according to the present invention, preferably, the total content of UMM, ULM, and ULL is 1 to 8 mass% (requirement (e2)). In the present invention, UMM refers to a triacylglycerol in which 1 molecule of U and 2 molecules of M are ester-bonded to glycerol. ULM refers to a triacylglycerol in which each 1 molecule of U, L, and M is ester-bonded to glycerol. ULL refers to a triacylglycerol in which 1 molecule of U and 2 molecules of L are ester-bonded to glycerol. In UMM, ULM, and ULL, bonding positions of constituent fatty acids on glycerol are arbitrary.

In the oil and fat composition according to the present invention, the total content of the above C24 to 30, HMM, HLM, HLL, HHM, HHL, HUM, HUL, UMM, ULM, and ULL is preferably 60 to 90 mass%, and more preferably 65 to 85 mass%. When the triacylglycerol contained in the oil and fat composition according to the present invention satisfies the requirements (a) to (e2), in an oily food obtained using the oil and fat composition according to the present invention, bloom and grain formation caused by fats and oils contained in the oily food are further effectively suppressed.

In the oil and fat composition of the present invention, the content of myristic acid with respect to the total amount of fatty acids constituting the oil and fat composition is preferably 15 mass% or less. The content of myristic acid is more preferably 12 mass% or less, and most preferably 0 to 10 mass%.

In addition, in the oil and fat composition of the present invention, the content of the unsaturated fatty acid (U) is preferably 20 mass% or less, more preferably 18 mass% or less, and most preferably 0 to 16 mass% with respect to the total amount of fatty acids constituting the oil and fat composition. In the oil and fat composition according to the first aspect described above, the content of the unsaturated fatty acid (U) is preferably 15 mass% or less, more preferably 10 mass% or less, and most preferably 0 to 5 mass% with respect to the total amount of fatty acids constituting the oil and fat composition. In the oil and fat composition according to the present invention, the content of the unsaturated fatty acid (U) is preferably 20 mass% or less, more preferably 2 to 18 mass%, and most preferably 3 to 16 mass% with respect to the total amount of fatty acids constituting the oil and fat composition. U is preferably an unsaturated fatty acid having 16 to 22 carbon atoms, and more preferably an unsaturated fatty acid having 16 to 18 carbon atoms. U is preferably linear.

In addition, in the oil and fat composition of the present invention, the content of fatty acids having 20 or more carbon atoms is 5 mass% or less, and most preferably 0 to 1 mass%.

Here, the constituent fatty acid of the oil and fat composition can be measured using a gas chromatographic method according to AOCS Celf-96.

In the oil and fat composition of the present invention, any edible fats and oils may be used as raw fats and oils as long as the requirements (a) to (d) and (f) are satisfied. Examples of raw fats and oils include various vegetable fats and oils and animal fats and oils such as soybean oil, rapeseed oil, corn oil, cottonseed oil, rice oil, sunflower oil, safflower oil, sesame oil, cocoa butter, shea fat, sal fat, palm oil, palm kernel oil, coconut oil, beef tallow, lard, milk fat, fish oil, and whale oil. Examples of raw fats and oils also include processed fats and oils obtained by applying one or two or more treatments selected from among hydrogenation, fractionation, and interesterification to mixed fats and oils including one, two or more of these vegetable fats and oils and animal fats and oils. One or more of the above edible fats and oils may be used in combination for raw fats and oils of the oil and fat composition of the present invention.

According to a preferable aspect of the present invention, the oil and fat composition of the present invention may be interesterified fats and oils including medium chain fatty acid triacylglycerol, laurin type fats and oils and non-laurin type fats and oils as raw fats and oils. Here, the medium chain fatty acid triacylglycerol (hereinafter referred to as MCT) is composed of fatty acids having 6 to 10 carbon atoms. That is, MCT is a triacylglycerol in which 3 molecules of a fatty acid having 6 to 10 carbon atoms are ester-bonded to 1 molecule of glycerol. The content of fatty acids having 6 carbon atoms with respect to the total amount of constituent fatty acids of MCT is preferably 10 mass% or less, and more preferably 0 to 5 mass%. In addition, the content of fatty acids having 10 carbon atoms with respect to the total amount of constituent fatty acids of MCT is preferably 10 mass% or more, more preferably 20 to 100 mass%, and most preferably 40 to 80 mass%. MCT preferably includes caprylic acid and capric acid as a constituent fatty acid.

In addition, here, the laurin type fats and oils are fats and oils in which the content of lauric acid with respect to the total amount of constituent fatty acids is 30 mass% or more (preferably 40 mass% or more). Examples of laurin type fats and oils include coconut oil, palm kernel oil, and fractionated oils such as palm kernel olein and palm kernel stearin obtained by fractionating them. In addition, examples thereof include fats and oils obtained by interesterification using them and hardened oils thereof (for example, extremely hardened palm kernel oil, and extremely hardened palm kernel stearin). Two or more of laurin type fats and oils may be used in combination.

In addition, here, the non-laurin type fats and oils are fats and oils in which the content of fatty acids having 16 or more carbon atoms with respect to the total amount of constituent fatty acids is 90 mass% or more. Examples of non-laurin type fats and oils include rapeseed oil, soybean oil, corn oil, safflower oil, cottonseed oil, sunflower oil, cocoa butter, shea fat, sal fat, and palm oil. In addition, processed fats and oils obtained by applying one or two or more treatments selected from among hydrogenation, fractionation, and interesterification thereto may be exemplified. Two or more of non-laurin type fats and oils may be used in combination. In the non-laurin type fats and oils, extremely hardened oil and/or palm stearin is preferably used. In addition, in the non-laurin type fats and oils, a combination of extremely hardened oil and/or palm stearin and fats and oils including 70 mass% or more (preferably 80 mass% or more) of unsaturated fatty acid as a constituent fatty acid is preferably used.

The interesterified fats and oils include, as raw fats and oils, preferably 2 to 30 mass%, 30 to 95 mass%, and 0 to 60 mass%, more preferably 3 to 25 mass%, 40 to 80 mass%, and 10 to 50 mass%, and most preferably 4 to 22 mass%, 45 to 70 mass%, and 20 to 45 mass% of MCT, laurin type fats and oils, and non-laurin type fats and oils, respectively. In addition, in the oil and fat composition according to the first aspect (not in accordance with the present invention), the interesterified fats and oils include, as raw fats and oils, preferably 5 to 30 mass%, 30 to 95 mass%, and 0 to 45 mass%, more preferably 7 to 25 mass%, 40 to 80 mass%, and 10 to 40 mass%, and most preferably 9 to 22 mass%, 50 to 70 mass%, and 20 to 35 mass% of MCT, laurin type fats and oils, and non-laurin type fats and oils, respectively. In addition, in the oil and fat composition according to the present invention, the interesterified fats and oils include, as raw fats and oils, preferably 2 to 26 mass%, 30 to 85 mass%, and 10 to 60 mass%, more preferably 3 to 21 mass%, 40 to 75 mass%, and 20 to 50 mass%, and most preferably 4 to 18 mass%, 45 to 65 mass%, and 25 to 45 mass% of MCT, laurin type fats and oils, and non-laurin type fats and oils, respectively. In addition, according to the oil and fat composition of the present invention, in non-laurin type fats and oils which are one of raw fats and oils of the interesterified fats and oils, the content of fats and oils including 70 mass% or more of unsaturated fatty acids is preferably 5 to 50 mass%, more preferably 10 to 45 mass%, and most preferably 15 to 40 mass%.

In addition, raw fats and oils of the interesterified fats and oils may be mixed so that the following requirements (i) to (iii) are satisfied.
(i) The content of saturated fatty acids having 8 to 10 carbon atoms with respect to the total amount of fatty acids constituting fats and oils is 4 to 26 mass%,
(ii) The content of saturated fatty acids having 12 to 14 carbon atoms with respect to the total amount of fatty acids constituting fats and oils is 20 to 60 mass%.
(iii) The content of saturated fatty acids having 16 to 22 carbon atoms with respect to the total amount of fatty acids constituting fats and oils is 25 to 55 mass%.

In addition, in the interesterified fats and oils, the content of saturated fatty acids having 20 or more carbon atoms with respect to the total amount of fatty acids constituting fats and oils is preferably less than 2 mass% and more preferably 0 to 1 mass%. Interesterified fats and oils have excellent anti-bloom and anti-grain effects even if the content of saturated fatty acids having 20 or more carbon atoms in constituent fatty acids is 0 mass% or very small.

In addition, according to the oil and fat composition of the first aspect (not in accordance with the present invention), the content of the saturated fatty acids having 8 to 10 carbon atoms (requirement (i)) that raw fats and oils of the interesterified fats and oils have is more preferably 12 to 26 mass%, still more preferably 13 to 25 mass%, and most preferably 14 to 24 mass%. The saturated fatty acid having 8 to 10 carbon atoms is preferably caprylic acid or capric acid. In addition, the content of the saturated fatty acids having 12 to 14 carbon atoms (requirement (ii)) is more preferably 30 to 50 mass%, and most preferably 35 to 45 mass%. The saturated fatty acid having 12 to 14 carbon atoms is preferably lauric acid or myristic acid. In addition, the content of the saturated fatty acid having 16 to 22 carbon atoms (requirement (iii)) is more preferably 30 to 53 mass% and most preferably 35 to 48 mass%. The saturated fatty acid having 16 to 22 carbon atoms is preferably linear. The saturated fatty acid having 16 to 22 carbon atoms is preferably palmitic acid, stearic acid, arachidic acid or behenic acid, and more preferably palmitic acid or stearic acid.

In addition, in the oil and fat composition according to the present invention, the content of the saturated fatty acid having 8 to 10 carbon atoms (requirement (i)) that raw fats and oils of the interesterified fats and oils have is more preferably 4 to 22 mass%, still more preferably 5 to 20 mass%, and most preferably 6 to 19 mass%. The saturated fatty acid having 8 to 10 carbon atoms is preferably caprylic acid or capric acid. In addition, the content of the saturated fatty acid having 12 to 14 carbon atoms (requirement (ii)) is more preferably 20 to 50 mass%, still more preferably 25 to 45 mass%, and most preferably 30 to 40 mass%. The saturated fatty acid having 12 to 14 carbon atoms is preferably lauric acid or myristic acid. In addition, the content of the saturated fatty acid having 16 to 22 carbon atoms (requirement (iii)) is more preferably 30 to 53 mass%, and most preferably 33 to 48 mass%. The saturated fatty acid having 16 to 22 carbon atoms is preferably linear. The saturated fatty acid having 16 to 22 carbon atoms is preferably palmitic acid, stearic acid, arachidic acid or behenic acid, and more preferably palmitic acid or stearic acid.

In addition, according to the oil and fat composition of the present invention, raw fats and oils of the interesterified fats and oils may be additionally mixed so that the following requirement (iv) is satisfied.
(iv) The content of unsaturated fatty acids having 16 to 22 carbon atoms with respect to the total amount of fatty acids constituting fats and oils is 2 to 18 mass%.

The content of the unsaturated fatty acid having 16 to 22 carbon atoms (requirement (iv)) is preferably 3 to 16 mass%, and more preferably 4 to 15 mass%. The unsaturated fatty acid having 16 to 22 carbon atoms is preferably linear. The unsaturated fatty acid having 16 to 22 carbon atoms is preferably oleic acid, linoleic acid, or linolenic acid.

An interesterification method used for producing the interesterified fats and oils is not particularly limited. A general interesterification method can be used. Interesterified fats and oils of the present invention can be produced using any of methods of chemical interesterification using a synthetic catalyst such as sodium methoxide and enzymatic interesterification using a lipase as a catalyst. Regarding interesterification, preferably, random interesterification without regio specificity is applied.

Enzymatic interesterification can be performed according to either an interesterification reaction with high specificity at positions 1 and 3 or an interesterification reaction with poor regiospecificity. Examples of a lipase formulation that can perform an interesterification reaction with high specificity at positions 1 and 3 include immobilized lipases (lipozyme TLIM, lipozyme RMIM and the like commercially available from Novozymes) derived from Rhizopus oryzae and/or derived from Rhizopus delmar (for example, PCT International Publication No. WO2009/031679), and derived from Rhizomucor miehei. Examples of a lipase formulation that can perform an interesterification reaction with poor regio specificity include alcaligenes-derived lipase (for example, lipase QLM and lipase PL, commercially available from Meito Sangyo Co., Ltd.), and Candida-derived lipase (for example, lipase OF commercially available from Meito Sangyo Co., Ltd.).

In the chemical interesterification, for example, 0.1 to 1 mass% of sodium methoxide with respect to the raw fats and oils is added to sufficiently dried raw fats and oils. Then, the interesterification reaction can be performed under a reduced pressure at 80 to 120°C for 0.5 to 1 hour while stirring. After the interesterification reaction is completed, the catalyst is removed by washing with water, and decolorization and deodorization treatments performed in a general edible fat and oil refining process can be then applied.

In the enzymatic interesterification, for example, for raw fats and oils, 0.02 to 10 mass%, preferably 0.04 to 5 mass% of lipase powder or immobilized lipase is added to the raw fats and oils. Then, the interesterification reaction can be performed at 40 to 80°C, and preferably 40 to 70°C, for 0.5 to 48 hours, preferably for 0.5 to 24 hours while stirring. After the interesterification reaction is completed, the catalyst is removed from the reaction product through filtration or the like. Then, decolorization and deodorization treatments performed in a general edible fat and oil refining process can be applied.

The oil and fat composition of the present invention suppresses bloom and grain formation caused by fats and oils contained in the oily food by being mixed as a part of fats and oils contained in the oily food. The oil and fat composition of the present invention may be mixed into an oily food using the oil and fat composition as a blooming and grain formation-suppressing agent without change or may be mixed as a blooming and grain formation-suppressing agent in a state in which an oil and fat composition, other fats and oils and/or powder, and the like are mixed. The content of the oil and fat composition of the present invention in fats and oils contained in the oily food is preferably 0.1 to 35 mass%, more preferably 0.1 to 16 mass%, still more preferably 0.5 to 10 mass%, and most preferably 1 to 8 mass%. Here, in the present invention, fats and oils contained in the oily food include fats and oils derived from oil-containing raw materials. For example, when an oily food includes 30 mass% of a cacao mass in which the content of fats and oils (cocoa butter) is 55 mass%, the oily food includes 16.5 mass% (=30×0.55) of fats and oils as a cacao mass-derived component.

The degree to which the oil and fat composition of the present invention suppresses bloom and grain formation can be evaluated by, for example, the degree to which the crystal polymorph of cocoa butter of which the crystal is adjusted to Form V transitions to Form VI within a certain time. The crystal polymorph of cocoa butter can be determined from a diffraction peak obtained according to X-ray diffraction (powder method) measurement. That is, short interplanar spacings of fat and oil crystals are measured according to X-ray diffraction at 2θ in a range of 17 to 26 degrees, and when a strong diffraction peak corresponding to an interplanar spacing of 4.5 to 4.7Å is detected and no diffraction peaks corresponding to an interplanar spacing of 4.1 to 4.3Å and 3.8 to 3.9Å are detected, fat and oil crystals can be determined as Form β (Form V or Form VI). In addition, when the intensity ratio of the diffraction peak detected at 3.69Å with respect to the diffraction peak detected at 3.75Å is 0.5 or less, fat and oil crystals have Form V, and the intensity ratio exceeds 0.5, it can be determined that formation of the Form VI crystal has started. Then, when the intensity ratio exceeds 3.0, it can be determined that the Form VI crystal has become dominant (blooming is likely to occur).

The present invention also provides an oily food in which fats and oils are in a continuous phase, and the content of C24 to 30 in the fats and oils is 0.02 to 5 mass%, the total content of HMM, HLM, and HLL is 0.3 to 18 mass%, and the total content of HHM and HHL is 0.2 to 14 mass%. The content of C24 to 30 in the fats and oils contained in the oily food of the present invention is preferably 0.02 to 2 mass%, more preferably 0.08 to 1.2 mass%, and most preferably 0.12 to 0.8 mass%. In addition, the total content of HMM, HLM, and HLL in the fats and oils contained in the oily food of the present invention is preferably 0.3 to 10 mass%, more preferably 0.9 to 6 mass%, and most preferably 1.5 to 4 mass%. In addition, the total content of HHM and HHL in the fats and oils contained in the oily food of the present invention is preferably 0.2 to 8 mass%, more preferably 0.5 to 5 mass%, and most preferably 1 to 3 mass%. In addition, the content of HLM in the fats and oils contained in the oily food of the present invention is preferably 0.2 to 9 mass%, more preferably 0.2 to 5 mass%, still more preferably 0.4 to 4 mass%, and most preferably 0.6 to 3 mass%.

The fats and oils contained in the oily food of the present invention may further include a total content of 0.02 to 6 mass% of HUM and HUL. The total content of HUM and HUL in the fats and oils contained in the oily food of the present invention is more preferably 0.04 to 3 mass%, still more preferably 0.08 to 1.5 mass%, and most preferably 0.12 to 1 mass%. In addition, the fats and oils contained in the oily food of the present invention may further include a total content of 0.01 to 3 mass% of UMM, ULM, and ULL. The total content of UMM, ULM, and ULL in the fats and oils contained in the oily food of the present invention is more preferably 0.01 to 1.5 mass%, still more preferably 0.04 to 0.8 mass%, and most preferably 0.06 to 0.5 mass%.

The oily food of the present invention is a food in which fats and oils are in a continuous phase. Examples of oily foods include chocolate, fat cream, butter cream, margarine, and spread. Regarding the oily food of the present invention, preferably, the oil and fat composition of the present invention may be mixed as a blooming and grain formation-suppressing agent without change, or may be mixed as a blooming and grain formation-suppressing agent in a state in which an oil and fat composition, other fats and oils and/or powder, and the like are mixed, and thus the content of the various triacylglycerols in the fats and oils contained in the oily food is adjusted. For example, when the oily food is a chocolate, a proportion of the oil and fat composition of the present invention in the fats and oils contained in the chocolate is preferably 0.1 to 35 mass%, more preferably 0.1 to 20 mass%, still more preferably 1 to 10 mass%, and most preferably 2 to 6 mass%.

In the oily food of the present invention, raw materials and additives that are generally used for oily foods can be used. In addition, when the oily food of the present invention is produced, a method that is generally used for producing oily foods can be applied. For example, when the oily food is a chocolate, the chocolate is produced using cacao mass, cocoa powder, sugar, milk powder, and the like as raw materials and by applying processes such as mixing, fragmentation, refining, tempering, filling into a mold, and cooling. In the oily food of the present invention, bloom and grain formation caused by the contained fats and oils are suppressed.

### Examples

While the present invention will be described below with reference to examples, the present invention is not limited to these examples.

### [Method of analyzing fatty acids of fats and oils]

Analysis of fatty acids of fats and oils was performed according to measurement using a gas chromatographic method according to AOCS Celf-96.

### [Method of analyzing triacylglycerols of fats and oils]

Analysis of triacylglycerols of fats and oils was performed according to measurement using a gas chromatographic method (JAOCS, vol70, 11, 1111-1114 (1993)). Regarding peaks in which a plurality of triacylglycerols overlapped, the content of each triacylglycerol was allocated according to probability calculation.

### [Measurement of X-ray diffraction image of fat and oil crystal]

Using an X-ray diffractometer UltimaIV (commercially available from Rigaku Corporation), CuKα (λ=1.542Å) was set as a radiation source, a Cu filter was used, and under conditions of an output of 1.6 kW, an operation angle of 0.96 to 30.0°, and a measurement speed of 2°/min, an X-ray diffraction image of fat and oil crystals was measured.

### [Preparation 1 of oil and fat compositions]

The following oil and fat compositions A to J were prepared. The formulations of fatty acids of oil and fat compositions and triacylglycerol (TAG) are shown in Examples 1 to 10 in Tables 1 and 2. The oil and fat compositions C to H were the oil and fat composition according to the first aspect. They are not according to the invention and are present for illustration purposes only.

### (Oil and fat composition A)

Fats and oils in which 49 parts by mass of MCT1 and 51 parts by mass of extremely hardened rapeseed oil were mixed were interesterified using sodium methoxide as a catalyst. The obtained interesterified fats and oils were decolorized and deodorized. The interesterified fats and oils were used as the oil and fat composition A.

### (Oil and fat composition B)

Fats and oils in which 45 parts by mass of MCT2 and 55 parts by mass of extremely hardened palm kernel oil were mixed were interesterified using sodium methoxide as a catalyst. The obtained interesterified fats and oils were decolorized and deodorized. The interesterified fats and oils were used as the oil and fat composition B.

### (Oil and fat composition C)

Fats and oils in which 20 parts by mass of MCT1, 55 parts by mass of extremely hardened palm kernel oil, and 25 parts by mass of extremely hardened rapeseed oil were mixed were interesterified using sodium methoxide as a catalyst. The obtained interesterified fats and oils were decolorized and deodorized. The interesterified fats and oils were used as the oil and fat composition C.

### (Oil and fat composition D)

Fats and oils in which 10 parts by mass of MCT2, 65 parts by mass of extremely hardened palm kernel oil and 25 parts by mass of extremely hardened rapeseed oil were mixed were interesterified using sodium methoxide as a catalyst. The obtained interesterified fats and oils were decolorized and deodorized. The interesterified fats and oils were used as the oil and fat composition D.

### (Oil and fat composition E)

Fats and oils in which 20 parts by mass of MCT1, 55 parts by mass of extremely hardened palm kernel oil and 25 parts by mass of extremely hardened high erucic acid rapeseed oil were mixed were interesterified using sodium methoxide as a catalyst. The obtained interesterified fats and oils were decolorized and deodorized. The interesterified fats and oils were used as the oil and fat composition E.

### (Oil and fat composition F)

Fats and oils in which 10 parts by mass of MCT1, 65 parts by mass of extremely hardened palm kernel oil and 25 parts by mass of extremely hardened rapeseed oil were mixed were interesterified using sodium methoxide as a catalyst. The obtained interesterified fats and oils were decolorized and deodorized. The interesterified fats and oils were used as the oil and fat composition F.

### (Oil and fat composition G)

Fats and oils in which 10 parts by mass of MCT1, 65 parts by mass of extremely hardened palm kernel oil and 25 parts by mass of extremely hardened palm oil were mixed were interesterified using sodium methoxide as a catalyst. The obtained interesterified fats and oils were decolorized and deodorized. The interesterified fats and oils were used as the oil and fat composition G.

### (Oil and fat composition H)

Fats and oils in which 10 parts by mass of MCT1 and 90 parts by mass of extremely hardened palm kernel oil were mixed were interesterified using sodium methoxide as a catalyst. The obtained interesterified fats and oils were decolorized and deodorized. The interesterified fats and oils were used as the oil and fat composition H.

### (Oil and fat composition I)

Fats and oils in which 50 parts by mass of trilaurin and 50 parts by mass of extremely hardened rapeseed oil were mixed were interesterified using sodium methoxide as a catalyst. The obtained interesterified fats and oils were decolorized and deodorized. The interesterified fats and oils were used as the oil and fat composition I.

### (Oil and fat composition J)

Fats and oils in which 10 parts by mass of MCT1, 65 parts by mass of extremely hardened palm kernel oil and 25 parts by mass of extremely hardened rapeseed oil were mixed were interesterified using sodium methoxide as a catalyst. The obtained interesterified fats and oils were decolorized and thin-film distilled. The interesterified fats and oils were used as the oil and fat composition J.

Here, for MCT1, MCT (commercially available from The Nisshin OilliO Group, Ltd.) in which fatty acids constituting a triacylglycerol were caprylic acid (8 carbon atoms) and capric acid (10 carbon atoms) and its mass ratio was 30:70 was used. For MCT2, MCT (commercially available from The Nisshin OilliO Group, Ltd.) in which fatty acids constituting a triacylglycerol were caprylic acid (8 carbon atoms) and capric acid (10 carbon atoms) and its mass ratio was 60:40 was used.

### [Evaluation of bloom resistance]

5 parts by mass of the oil and fat compositions A to J was added and mixed into 100 parts by mass of cocoa butter. The obtained mixed fats and oils were heated at 80°C and thus completely melted. The melted mixed fats and oils were kept at 60°C and then cooled at 0°C for 1 hour and thus solidified. Maintaining at 20°C for 2 hours and then maintaining at 30°C for 1 hour were set as a cycle, and 224 cycles were repeated for the solidified mixed fats and oils. After 8, 56, 112, 168 and 224 cycles, X-ray diffraction images were measured. The intensity ratios of the diffraction peak detected at 3.69Å with respect to the diffraction peak detected at 3.75Å in the X-ray diffraction image are shown in Tables 1 and 2. When the intensity ratio exceeded 3.0, Form VI crystals were determined to be dominant (blooming was likely to occur). Here, when only cocoa butter was used, the intensity ratio after 224 cycles was 8.0.

### [Evaluation of grain resistance]

50 parts by mass of cacao mass and 50 parts by mass of soft chocolate fats and oils (containing 60 mass% of rapeseed oil) were mixed. The mixture was heated at 60°C and melted to obtain a molten liquid. With respect to 100 parts by mass of the molten liquid of the mixture, 7.5 parts by mass of each of the completely melted oil and fat compositions A to J was added and mixed. 40 g of the obtained mixture was put into a cup and then cooled and kept at 10°C. The internal state of the mixture kept at 10°C for 21 days was observed. The observation results were scored based on the following criteria. The scores are shown in Tables 1 and 2. Here, the score was 0 when no oil and fat composition was mixed.

### Score

| | |
|---|---|
| Smooth and no grain | 5 |
| Several small grains were confirmed | 4 |
| About 10 small grains were confirmed | 3 |
| Small grains were confirmed throughout | 2 |
| Dense small grains were confirmed throughout | 1 |
| Coarse grains were confirmed throughout | 0 |

**Table 1]**

| Table 1 Analysis values and evaluation results of oil and fat compositions (numbers for compositions are based on mass%) | | | | | |
|---|---|---|---|---|---|
| | Example 1 Reference | Example 2 Comparison | Example 3 | Example 4 | Example 5 |
| Oil and fat composition | A | B | C | D | E |
| Constituent fatty acid | | | | | |
| Caprylic acid | 14.5 | 28.1 | 7.8 | 11.4 | 8.3 |
| Capric acid | 33.2 | 20.7 | 15.6 | 9.6 | 15.8 |
| Lauric acid | 0.0 | 25.5 | 25.2 | 25.5 | 26.6 |
| Myristic acid | 0.0 | 8.9 | 8.9 | 9.2 | 8.7 |
| Palmitic acid | 3.5 | 4.8 | 6.0 | 6.3 | 5.3 |
| Stearic acid | 45.6 | 11.9 | 35.6 | 37.2 | 20.9 |
| Behenic acid | 1.1 | 0.0 | 0.1 | 0.1 | 11.4 |
| Others | 2.1 | 0.1 | 0.8 | 0.7 | 3.0 |
| Sum | 100 | 100 | 100 | 100 | 100 |
| TAG composition | | | | | |
| C24 to 30 (Requirement a) | 17.0 | 38.9 | 9.0 | 10.1 | 9.1 |
| HMM | 42.7 | 18.7 | 11.5 | 10.2 | 11.5 |
| HLM | 0.0 | 16.0 | 20.9 | 20.4 | 21.5 |
| HLL | 0.0 | 3.4 | 9.5 | 10.2 | 10.1 |
| (Requirement b) | 42.7 | 38.1 | 41.9 | 31.8 | 43.1 |
| HHM | 29.9 | 6.6 | 16.6 | 16.7 | 15.0 |
| HHL | 0.0 | 2.8 | 15.1 | 16.7 | 14.0 |
| (Requirement c) | 29.9 | 9.4 | 31.7 | 33.4 | 29.0 |
| Evaluation results | | | | | |
| Bloom resistance | | | | | |
| 8 cycles | 0.4 | 0.2 | 0.4 | 0.4 | 0.4 |
| 56 cycles | 1.2 | 1.6 | 0.6 | 0.7 | 0.7 |
| 112 cycles | 1.9 | 3.3 | 1.6 | 1.6 | 1.3 |
| 168 cycles | 2.3 | 4.6 | 2.0 | 2.9 | 2.4 |
| 224 cycles | 3.0 | 4.6 | 2.6 | 3.0 | 2.9 |
| Grain resistance | | | | | |
| After 21 days | 3 | 3 | 4 | 4 | 3 |

**[Table 2]**

| Table 2 Analysis values and evaluation results of oil and fat compositions (numbers for compositions are based on mass%) | | | | | |
|---|---|---|---|---|---|
| | Example 6 | Example 7 | Example 8 | Example 9 Comparison | Example 10 Comparison |
| Oil and fat composition | F | G | H | I | J |
| Constituent fatty acid | | | | | |
| Caprylic acid | 5.5 | 5.4 | 6.0 | 1.4 | 4.4 |
| Capric acid | 9.3 | 9.1 | 9.9 | 0.0 | 7.4 |
| Lauric acid | 29.2 | 29.4 | 42.1 | 48.1 | 27.4 |
| Myristic acid | 10.1 | 10.4 | 14.6 | 0.1 | 9.9 |
| Palmitic acid | 6.8 | 16.9 | 7.9 | 2.5 | 7.1 |
| Stearic acid | 38.1 | 28.3 | 19.5 | 46.6 | 41.5 |
| Behenic acid | 0.1 | 0.1 | 0.0 | 0.2 | 0.1 |
| Others | 0.9 | 0.4 | 0.0 | 1.1 | 2.2 |
| Sum | 100 | 100 | 100 | 100 | 100 |
| TAG composition | | | | | |
| C24 to 30 (Requirement a) | 4.9 | 4.6 | 7.5 | 0.0 | 0.1 |
| HMM | 5.4 | 5.3 | 4.2 | 0.1 | 3.1 |
| HLM | 18.1 | 17.9 | 18.9 | 2.9 | 15.3 |
| HLL | 15.1 | 15.2 | 21.1 | 38.9 | 14.9 |
| (Requirement b) | 38.6 | 38.4 | 44.2 | 41.9 | 33.3 |
| HHM | 13.6 | 13.6 | 7.7 | 1.1 | 16.2 |
| HHL | 22.6 | 23.1 | 17.1 | 30.5 | 29.3 |
| (Requirement c) | 36.2 | 36.7 | 24.8 | 31.6 | 45.5 |
| Evaluation results | | | | | |
| Bloom resistance | | | | | |
| 8 cycles | 0.4 | 0.4 | 0.4 | 0.5 | 0.4 |
| 56 cycles | 0.7 | 0.7 | 1.0 | 1.4 | 0.8 |
| 112 cycles | 2.2 | 1.9 | 2.2 | 1.4 | 1.6 |
| 168 cycles | 2.2 | 2.4 | 2.3 | 1.7 | 2.5 |
| 224 cycles | 2.3 | 2.4 | 2.9 | 2.6 | 2.6 |
| Grain resistance | | | | | |
| After 21 days | 5 | 5 | 3 | 2 | 2 |

### [Preparation 2 of oil and fat compositions]

The following oil and fat compositions K to N were prepared. The formulations of fatty acids of oil and fat compositions and triacylglycerol (TAG) are shown in Examples 11 to 14 in Table 3. The oil and fat compositions K to N were the oil and fat composition according to the present invention.

### (Oil and fat composition K)

Fats and oils in which 5 parts by mass of MCT1, 55 parts by mass of extremely hardened palm kernel oil, 25 parts by mass of extremely hardened rapeseed oil, and 15 parts by mass of rapeseed oil were mixed were interesterified using sodium methoxide as a catalyst. The obtained interesterified fats and oils were decolorized and deodorized. The interesterified fats and oils were used as the oil and fat composition K.

### (Oil and fat composition L)

Fats and oils in which 10 parts by mass of MCT1, 55 parts by mass of extremely hardened palm kernel oil, 25 parts by mass of extremely hardened rapeseed oil, and 10 parts by mass of rapeseed oil were mixed were interesterified using sodium methoxide as a catalyst. The obtained interesterified fats and oils were decolorized and deodorized. The interesterified fats and oils were used as the oil and fat composition L.

### (Oil and fat composition M)

Fats and oils in which 15 parts by mass of MCT1, 55 parts by mass of extremely hardened palm kernel oil, 25 parts by mass of extremely hardened rapeseed oil, and 5 parts by mass of rapeseed oil were mixed were interesterified using sodium methoxide as a catalyst. The obtained interesterified fats and oils were decolorized and deodorized. The interesterified fats and oils were used as the oil and fat composition M.

### (Oil and fat composition N)

Fats and oils in which 15 parts by mass of MCT1, 60 parts by mass of palm kernel oil, and 25 parts by mass of extremely hardened palm oil were mixed were interesterified using sodium methoxide as a catalyst. The obtained interesterified fats and oils were decolorized and deodorized. The interesterified fats and oils were used as the oil and fat composition N.

Here, for MCT1, MCT (commercially available from The Nisshin OilliO Group, Ltd.) in which fatty acids constituting a triacylglycerol were caprylic acid (8 carbon atoms) and capric acid (10 carbon atoms) and its mass ratio was 30:70 was used.

**[Table 3]**

| Table 3 Analysis values of oil and fat compositions (numbers for compositions are based on mass%) | | | | |
|---|---|---|---|---|
| | Example 11 | Example 12 | Example 13 | Example 14 |
| Oil and fat composition | K | L | M | N |
| Constituent fatty acid | | | | |
| Caprylic acid | 2.8 | 4.4 | 6.3 | 6.3 |
| Capric acid | 4.3 | 8.2 | 12.3 | 12.2 |
| Lauric acid | 25.6 | 25.6 | 25.5 | 28.1 |
| Myristic acid | 8.1 | 8.1 | 8.0 | 9.4 |
| Palmitic acid | 6.5 | 6.3 | 6.0 | 16.7 |
| Stearic acid | 37.6 | 37.4 | 36.9 | 16.2 |
| Behenic acid | 0.1 | 0.1 | 0.1 | 0.1 |
| Oleic acid | 9.9 | 6.5 | 3.9 | 9.6 |
| Linoleic acid | 2.9 | 1.9 | 0.3 | 1.3 |
| Linolenic acid | 1.1 | 0.7 | - | 0 |
| Others | 1.1 | 0.8 | 0.7 | 0.1 |
| Sum | 100 | 100 | 100 | 100 |
| TAG composition | | | | |
| C24 to 30 | 0.6 | 1.7 | 3.8 | 3.9 |
| (Requirement a) | | | | |
| HMM | 1.3 | 3.6 | 7.2 | 5.7 |
| HLM | 7.8 | 12.7 | 17.2 | 15.2 |
| HLL | 12.0 | 11.1 | 10.3 | 10.0 |
| (Requirement b) | 21.0 | 27.4 | 34.7 | 31.0 |
| HHM | 6.7 | 10.8 | 14.5 | 9.8 |
| HHL | 20.5 | 18.9 | 17.2 | 12.9 |
| (Requirement c) | 27.2 | 29.7 | 31.7 | 22.7 |
| HUM | 3.5 | 3.7 | 2.3 | 4.8 |
| HUL | 10.6 | 6.4 | 2.7 | 6.3 |
| (Requirement d) | 14.1 | 10.1 | 5.0 | 11.1 |
| UMM | 0.3 | 0.6 | 0.6 | 1.4 |
| ULM | 2.0 | 2.2 | 1.4 | 3.7 |
| ULL | 3.1 | 1.9 | 0.8 | 2.5 |
| (Requirement e) | 5.5 | 4.7 | 2.7 | 7.6 |

### [Production and evaluation of chocolate]

According to the formulations in Tables 4 and 5, chocolates of Examples 15 to 21 were produced using general methods (mixing, fragmentation, refining, tempering, filling into a mold, and cooling). Maintaining at 20°C for 12 hours and then maintaining at 32°C for 12 hours were set as a cycle, and 12 cycles were repeated for the chocolates. After 0, 4, 5, 6, 7, 8, 11 and 12 cycles, the state (bloom resistance) of the chocolate was observed. The observation results were scored based on the following criteria. The scores are shown in Tables 4 and 5.

### Score

| | |
|---|---|
| Glossy and there was no formation of blooming | 3 |
| Glossy was poor but there was no formation of blooming | 2 |
| Formation of slight blooming was observed | 1 |
| Formation of blooming was observed | 0 |

**[Table 4]**

| Table 4 Chocolate formulation and evaluation results (numbers for compositions and content are based on mass%) | | | |
|---|---|---|---|
| | Example 15 Reference | Example 16 | Example 17 |
| Formulation of chocolate | - | - | - |
| Oil and fat composition C | - | 1.0 | - |
| Oil and fat composition G | - | - | 1.0 |
| Oil and fat composition K | - | - | - |
| Oil and fat composition L | - | - | - |
| Oil and fat composition M | - | - | - |
| Oil and fat composition N | - | - | - |
| Cocoa butter | 12.0 | 11.0 | 11.0 |
| Cacao mass | 40.0 | 40.0 | 40.0 |
| Sugar | 47.45 | 47.45 | 47.45 |
| Emulsifier | 0.50 | 0.50 | 0.50 |
| Fragrance material | 0.05 | 0.05 | 0.05 |
| Sum | 100 | 100 | 100 |
| Oil/fat content of chocolate | 34.0 | 34.0 | 34.0 |
| In oils and fats of chocolate | | | |
| Content of C24 to 30 | 0 | 0.26 | 0.14 |
| Total content of HMM, HLM and HLL | 0 | 1.19 | 1.13 |
| Total content of HHM and HHL | 0 | 0.93 | 1.08 |
| Total content of HUM and HUL | 0 | 0 | 0 |
| Total content of UMM, ULM and ULL | 0 | 0 | 0 |
| Evaluation results of bloom resistance | | | |
| 0 cycles | 3 | 3 | 3 |
| 4 cycles | 2 | 3 | 3 |
| 5 cycles | 1 | 3 | 3 |
| 6 cycles | 0 | 3 | 3 |
| 7 cycles | | 3 | 3 |
| 8 cycles | | 3 | 3 |
| 11 cycles | | 1 | 1 |
| 12 cycles | | 0 | 0 |

**[Table 5]**

| | Table 5 Chocolate formulation and evaluation results (numbers for compositions and content are based on mass%) | | | |
|---|---|---|---|---|
| | Example 18 | Example 19 | Example 20 | Example 21 |
| Formulation of chocolate | | | | |
| Oil and fat composition C | - | - | - | - |
| Oil and fat composition G | - | - | - | - |
| Oil and fat composition K | 1.0 | - | - | - |
| Oil and fat composition L | - | 1.0 | - | - |
| Oil and fat composition M | - | - | 1.0 | - |
| Oil and fat composition N | - | - | - | 1.0 |
| Cocoa butter | 11.0 | 11.0 | 11.0 | 11.0 |
| Cacao mass | 40.0 | 40.0 | 40.0 | 40.0 |
| Sugar | 47.45 | 47.45 | 47.45 | 47.45 |
| Emulsifier | 0.50 | 0.50 | 0.50 | 0.50 |
| Fragrance material | 0.05 | 0.05 | 0.05 | 0.05 |
| Sum | 100 | 100 | 100 | 100 |
| Oil/fat content of chocolate | 34.0 | 34.0 | 34.0 | 34.0 |
| In oils and fats of chocolate | | | | |
| Content of C24 to 30 | 0.02 | 0.05 | 0.11 | 0.11 |
| Total content of HMM, HLM and HLL | 0.62 | 0.81 | 1.02 | 0.91 |
| Total content of HHM and HHL | 0.80 | 0.87 | 0.93 | 0.67 |
| Total content of HUM and HUL | 0.41 | 0.30 | 0.15 | 0.33 |
| Total content of UMM, ULM and ULL | 0.16 | 0.14 | 0.08 | 0.22 |
| Evaluation results of bloom resistance | | | | |
| 0 cycles | 3 | 3 | 3 | 3 |
| 4 cycles | 3 | 3 | 3 | 3 |
| 5 cycles | 3 | 3 | 3 | 3 |
| 6 cycles | 3 | 3 | 3 | 3 |
| 7 cycles | 3 | 3 | 3 | 3 |
| 8 cycles | 2 | 3 | 3 | 3 |
| 11 cycles | 1 | 1 | 1 | 1 |
| 12 cycles | 0 | 0 | 0 | 0 |

## Claims

1. An oil and fat composition, **characterized in that** a content of the fatty acids having 20 or more carbon atoms is 5 mass% or less with respect to a total amount of fatty acids constituting the oil and fat composition, the oil and fat composition satisfies the following requirements (a) to (c), and further satisfies the following requirement (d) or/and (f) :
(a) the content of C24 to 30 is 0.5 to 10 mass%,
(b) the total content of HMM, HLM, and HLL is 17 to 40 mass%, and
(c) the total content of HHM and HHL is 17 to 40 mass%,
(d) the total content of HUM and HUL is 2 to 16 mass%,
(f) the content of HLM is larger than the content of HMM (HLM>HMM),
wherein C24 to 30, M, L, H, U, HMM, HLM, HLL, HHM HHL, HUM, and HUL have the following meanings:
C24 to 30: triacylglycerol in which the total number of carbon atoms of 3 molecules of fatty acid bonded to glycerol is 24 to 30;
M: saturated fatty acid having 8 to 10 carbon atoms;
L: lauric acid;
H: saturated fatty acid having 14 or more carbon atoms;
U: unsaturated fatty acid having 16 or more carbon atoms;
HMM: triacylglycerol in which 1 molecule of H and 2 molecules of M are ester-bonded to glycerol;
HLM: triacylglycerol in which each 1 molecule of H, L and M is ester-bonded to glycerol;
HLL: triacylglycerol in which 1 molecule of H and 2 molecules of L are ester-bonded to glycerol;
HHM: triacylglycerol in which 2 molecules of H and 1 molecule of M are ester-bonded to glycerol;
HHL: triacylglycerol in which 2 molecules of H and 1 molecule of L are ester-bonded to glycerol;
HUM: triacylglycerol in which each 1 molecule of H, U and M is ester-bonded to glycerol;
HUL: triacylglycerol in which each 1 molecule of H, U and L is ester-bonded to glycerol.

2. The oil and fat composition according to claim 1, which further satisfies the following requirement (e2):
(e2) the total content of UMM, ULM, and ULL is 1 to 8 mass%,
wherein UMM, ULM, and ULL have the following meanings:
UMM: triacylglycerol in which 1 molecule of U and 2 molecules of M are ester-bonded to glycerol;
ULM: triacylglycerol in which each 1 molecule of U, L, and M is ester-bonded to glycerol;
ULL: triacylglycerol in which 1 molecule of U and 2 molecules of L are ester-bonded to glycerol.

3. The oil and fat composition according to claim 1, comprising interesterified fats and oils containing 2 to 30 mass% of medium chain fatty acid triacylglycerol, 30 to 95 mass% of laurin type fats and oils and 0 to 60 mass% of non-laurin type fats and oils as raw fats and oils.

4. The oil and fat composition according to claim 1 , comprising interesterified fats and oils containing 5 to 30 mass% of medium chain fatty acid triacylglycerol, 30 to 95 mass% of laurin type fats and oils and 0 to 45 mass% of non-laurin type fats and oils as raw fats and oils.

5. The oil and fat composition according to claim 4, comprising interesterified fats and oils containing 2 to 26 mass% of medium chain fatty acid triacylglycerol, 30 to 85 mass% of laurin type fats and oils and 10 to 60 mass% of non-laurin type fats and oils as raw fats and oils.

6. An oily food, **characterized in that** the oily food in which fats and oils are in a continuous phase,
wherein, with respect to the fats and oils, the content of C24 to 30 is 0.02 to 5 mass%, the total content of HMM, HLM, and HLL is 0.3 to 18 mass%, and the total content of HHM and HHL is 0.2 to 14 mass%, and C24 to 30, M, L, H, HMM, HLM, HLL, HHM and HHL have the following meanings:
C24 to 30: triacylglycerol in which the total number of carbon atoms of 3 molecules of fatty acid bonded to glycerol is 24 to 30;
M: saturated fatty acid having 8 to 10 carbon atoms;
L: lauric acid;
H: saturated fatty acid having 14 or more carbon atoms;
HMM: triacylglycerol in which 1 molecule of H and 2 molecules of M are ester-bonded to glycerol;
HLM: triacylglycerol in which each 1 molecule of H, L and M is ester-bonded to glycerol;
HLL: triacylglycerol in which 1 molecule of H and 2 molecules of L are ester-bonded to glycerol;
HHM: triacylglycerol in which 2 molecules of H and 1 molecule of M are ester-bonded to glycerol;
HHL: triacylglycerol in which 2 molecules of H and 1 molecule of L are ester-bonded to glycerol.

7. A method of producing an oily food in which fats and oils are in a continuous phase, comprising:
mixing the oil and fat composition according to any one of claims 1 to 5, and adjusting the content of C24 to 30 to 0.02 to 5 mass%, the total content of HMM, HLM, and HLL to 0.3 to 18 mass%, and the total content of HHM and HHL to 0.2 to 14 mass% with respect to the fats and oils.

8. A method of suppressing oily food blooming and grain formation, comprising,
using the oil and fat composition according to any one of claims 1 to 5.

## Patentansprüche

1. Öl- und Fettzusammensetzung, **dadurch gekennzeichnet, dass** der Gehalt an Fettsäuren, aufweisend 20 oder mehr Kohlenstoffatome, 5 Massen-% oder weniger ist in Bezug auf eine Gesamtmenge der Fettsäuren, die die Öl- und Fettzusammensetzung bilden, wobei die Öl- und Fettzusammensetzung die folgenden Anforderungen (a) bis (c) erfüllt und ferner die folgende Anforderung (d) oder/und (f) erfüllt:
(a) der Gehalt an C24 bis 30 beträgt 0,5 bis 10 Massen-%,
(b) der Gesamtgehalt an HMM, HLM und HLL 17 bis 40 Massen-% beträgt, und
(c) der Gesamtgehalt an HHM und HHL 17 bis 40 Massen-% beträgt,
(d) der Gesamtgehalt an HUM und HUL 2 bis 16 Massen-% beträgt,
(f) der Gehalt an HLM größer ist als der Gehalt an HMM (HLM>HMM), wobei C24 bis 30, M, L, H, U, HMM, HLM, HLL, HHM HHL, HUM und HUL die folgenden Bedeutungen aufweisen:
C24 bis 30: Triacylglycerin, bei dem die Gesamtzahl der Kohlenstoffatome von 3 Molekülen von Fettsäure, gebunden an Glycerin, 24 bis 30 beträgt;
M: gesättigte Fettsäure mit 8 bis 10 Kohlenstoffatomen;
L: Laurinsäure;
H: gesättigte Fettsäure mit 14 oder mehr Kohlenstoffatomen;
U: ungesättigte Fettsäure mit 16 oder mehr Kohlenstoffatomen;
HMM: Triacylglycerin, bei dem 1 Molekül H und 2 Moleküle M über eine Esterbindung mit Glycerin verbunden sind;
HLM: Triacylglycerin, bei dem jeweils 1 Molekül H, L und M über eine Esterbindung mit Glycerin verbunden ist;
HLL: Triacylglycerin, bei dem 1 Molekül H und 2 Moleküle L über eine Esterbindung mit Glycerin verbunden sind;
HHM: Triacylglycerin, bei dem 2 Moleküle H und 1 Molekül M über eine Esterbindung mit Glycerin verbunden sind;
HHL: Triacylglycerin, bei dem 2 Moleküle H und 1 Molekül L über eine Esterbindung mit Glycerin verbunden sind;
HUM: Triacylglycerin, bei dem jeweils 1 Molekül H, U und M über eine Esterbindung mit Glycerin verbunden ist;
HUL: Triacylglycerin, bei dem je 1 Molekül H, U und L über eine Esterbindung mit Glycerin verbunden ist.

2. Öl- und Fettzusammensetzung gemäß Anspruch 1, die ferner die folgende Bedingung (e2) erfüllt:
(e2) der Gesamtgehalt an UMM, ULM und ULL 1 bis 8 Massen-% beträgt,
wobei UMM, ULM und ULL die folgenden Bedeutungen haben:
UMM: Triacylglycerin, bei dem 1 Molekül U und 2 Moleküle M über eine Esterbindung mit Glycerin verbunden sind;
ULM: Triacylglycerin, bei dem jeweils 1 Molekül U, L und M über eine Esterbindung mit Glycerin verbunden ist;
ULL: Triacylglycerin, bei dem 1 Molekül U und 2 Moleküle L über eine Esterbindung mit Glycerin verbunden sind.

3. Öl- und Fettzusammensetzung gemäß Anspruch 1, umfassend umgeesterte Fette und Öle, die 2 bis 30 Massen-% mittelkettiges Fettsäuretriacylglycerin, 30 bis 95 Massen-% Fette und Öle vom Laurin-Typ und 0 bis 60 Massen-% Fette und Öle vom Nicht-Laurin-Typ als rohe Fette und Öle enthalten.

4. Öl- und Fettzusammensetzung gemäß Anspruch 1, umfassend umgeesterte Fette und Öle, die 5 bis 30 Massen-% mittelkettiges Fettsäuretriacylglycerin, 30 bis 95 Massen-% Fette und Öle vom Laurin-Typ und 0 bis 45 Massen-% Fette und Öle vom Nicht-Laurin-Typ als rohe Fette und Öle enthalten.

5. Öl- und Fettzusammensetzung gemäß Anspruch 4, umfassend umgeesterte Fette und Öle, die 2 bis 26 Massen-% mittelkettiges Fettsäuretriacylglycerin, 30 bis 85 Massen-% Fette und Öle vom Laurin-Typ und 10 bis 60 Massen-% Fette und Öle vom Nicht-Laurin-Typ als rohe Fette und Öle enthalten.

6. Öliges Nahrungsmittel, **dadurch gekennzeichnet, dass** das ölige Nahrungsmittel, in dem Fette und Öle in einer kontinuierlichen Phase vorliegen,
wobei, bezogen auf die Fette und Öle, der Gehalt an C24 bis 30 0,02 bis 5 Massen-% beträgt, der Gesamtgehalt an HMM, HLM und HLL 0,3 bis 18 Massen-% beträgt und der Gesamtgehalt an HHM und HHL 0,2 bis 14 Massen-% beträgt und C24 bis 30, M, L, H, HMM, HLM, HLL, HHM und HHL die folgenden Bedeutungen haben:
C24 bis 30: Triacylglycerin, bei dem die Gesamtzahl der Kohlenstoffatome von 3 Molekülen von Fettsäure, die an Glycerin gebunden sind, 24 bis 30 beträgt;
M: gesättigte Fettsäure mit 8 bis 10 Kohlenstoffatomen;
L: Laurinsäure;
H: gesättigte Fettsäure mit 14 oder mehr Kohlenstoffatomen;
HMM: Triacylglycerin, bei dem 1 Molekül H und 2 Moleküle M über eine Esterbindung mit Glycerin verbunden sind;
HLM: Triacylglycerin, bei dem jeweils 1 Molekül H, L und M über eine Esterbindung mit Glycerin verbunden ist;
HLL: Triacylglycerin, bei dem 1 Molekül H und 2 Moleküle L über eine Esterbindung mit Glycerin verbunden sind;
HHM: Triacylglycerin, bei dem 2 Moleküle H und 1 Molekül M über eine Esterbindung mit Glycerin verbunden sind;
HHL: Triacylglycerin, bei dem 2 Moleküle H und 1 Molekül L über eine Esterbindung mit Glycerin verbunden sind.

7. Verfahren zur Herstellung eines öligen Nahrungsmittels, in dem sich Fette und Öle in einer kontinuierlichen Phase befinden, umfassend:
Mischen der Öl- und Fettzusammensetzung gemäß einem der Ansprüche 1 bis 5 und Einstellen des Gehalts an C24 bis 30 auf 0,02 bis 5 Massen-%, des Gesamtgehalts an HMM, HLM und HLL auf 0,3 bis 18 Massen-% und des Gesamtgehalts an HHM und HHL auf 0,2 bis 14 Massen-%, bezogen auf die Fette und Öle.

8. Verfahren zur Unterdrückung des Ausblühens von öligen Nahrungsmitteln und der Kornbildung, umfassend,
Verwenden der Öl- und Fettzusammensetzung gemäß einem der Ansprüche 1 bis 5.

## Revendications

1. Composition d'huile et de graisse, **caractérisée en ce qu'**une teneur des acides gras ayant 20 ou plus atomes de carbone est de 5 % en masse ou moins par rapport à une teneur totale d'acides gras constituant la composition d'huile et de graisse, la composition d'huile et de graisse satisfait les exigence suivantes (a) à (c) et satisfait en outre l'exigence suivante (d) et/ou (f) :
(a) la teneur de C24 à 30 est de 0,5 à 10 % en masse,
(b) la teneur totale de HMM. HLM et HLL est de17 à 40 % en masse et
(c) la teneur totale de HHM et de HHL est de 17 à 40 % en masse,
(d) la teneur totale de HUM et de HUL est de 2 à 16% en masse,
(f) la teneur de HLM est plus grande que la teneur de HMM (HLM > HMM)
C24 à 30, M, L, H, U, HMM, HLM, HLL, HHM, HHL, HUM et HUL ayant les significations suivantes :
C24 à 30 : triacylglycérol dans lequel le nombre total d'atomes de carbone de 3 molécules d'acide gras liées au glycérol est de 24 à 30 ;
M: acide gras saturé ayant 8 à 10 atomes de carbone;
L: acide laurique ;
H: acide gras saturé ayant 14 ou plus atomes de carbone ;
U: acide gras insaturé ayant 16 ou plus atomes de carbone ;
HMM : triacylglycérol dans lequel 1 molécule de H et 2 molécules de M sont liées par un ester au glycérol ;
HLM : triacylglycérol dans lequel chaque 1 molécule de H, L et M est liée par un ester au glycérol ;
HLL : triacyglycérol dans lequel 1 molécule de H et 2 molécules de L sont liées par un ester au glycérol ;
HHM : triacylglycérol dans lequel 2 molécules de H et 1 molécule de M sont liées par un ester au glycérol ;
HHL : triacylglycérol dans lequel 2 molécules de H et une molécule de L sont liées par un ester au glycérol ;
HUM : triacylglycérol dans lequel chaque 1 molécule de H, U et M est liée par un ester au glycérol ;
HUL : triacylglycérol dans lequel chaque 1 molécule de H, U et L est liée par un ester au glycérol.

2. Composition d'huile et de graisse selon la revendication 1, qui satisfait en outre l'exigence suivante (e2) :
(e2) la teneur totale d'UMM, d'ULM et de ULL est de 1 à 8 % en masse ;
UMM : triacéylglycérol dans lequel 1 molécule de U et 2 molécules de M sont liées par un ester au glycérol :
ULM : triacylglycérol dans lequel chaque 1 molécule de U, L et M est liée par un ester au glycérol ;
ULL : triacylglycérol dans lequel 1 molécule de U et 2 molécules de M sont liées par un ester au glycérol .

3. Composition d'huile et de graisse selon la revendication 1, comprenant des graisses et des huiles interestérifiées contenant 2 à 30 % en masse de triacylglycérol de chaîne d'acide gras moyenne, 30 à 95 % en masse de graisses et d'huiles de type laurine et 0 à 60 % en masse de graisses et d'huiles de type non laurine comme graisses et huiles brutes.

4. Composition d'huile et de graisse selon la revendication 1, comprenant des graisses et des huiles interestérifiées contenant 5 à 30 % en masse de triacylglycérol à chaîne d'acide gras moyenne, 30 à 95 % en masse de graisses et d'huiles de type laurine et 0 à 45 % en masse de graisses et d'huiles de type non laurine comme graisses et huiles brutes.

5. Composition d'huile et de graisse selon la revendication 4, comprenant des graisses et des huiles interestérifiées contenant 2 à 26 % en masse de triacylglycérol à chaîne d'acide gras moyenne, 30 à 85 % pour cent en masse de graisses et d'huiles de type laurine et 10 à 60 % en masse de graisses et d'huiles de type non laurine comme graisses et huiles brutes.

6. Aliment huileux, **caractérisé en ce que** l'aliment huileux dans lequel des graisses et des huiles sont dans une phase continue,
par rapport aux graisses et aux huiles, la teneur de C24 à 30 étant de 0,02 à 5 % en masse, la teneur totale de HMM. HLM et HLL étant de 0,3 à 18 % en masse et la teneur totale de HHM et de HHL étant de 0,2 à 14 % en masse et C24 à 30, M, L, H, HMM, HLM, HLL, HHM et HHL ayant les significations suivantes :
C24 à 30 : triacylglycérol dans lequel le nombre total d'atomes de carbone de 3 molécules d'acide gras liées au glycérol est de 24 à 30 ;
M: acide gras saturé ayant 8 à 10 atomes de carbone ;
L: acide laurique ;
H: acide gras saturé ayant 14 ou plus atomes de carbone ;
HMM : triacylglycérol dans lequel 1 molécule de H et 2 molécules de M sont liées par un ester au glycérol ;
HLM : triacylglycérol dans lequel chaque 1 molécule de H, L et M est liée par un ester au glycérol ;
HLL : triacyglycérol dans lequel 1 molécule de H et 2 molécules de L sont liées par un ester au glycérol ;
HHM : triacylglycérol dans lequel 2 molécules de H et 1 molécule de M sont liées par un ester au glycérol ;
HHL : triacylglycérol dans lequel 2 molécules de H et 1 molécule de L sont liées par un ester au glycérol.

7. Procédé de production d'un aliment huileux dans lequel des graisses et des huiles sont dans une phase continue, comprenant :
le mélange de la composition d'huile et de graisse selon l'une quelconque des revendications 1 à 5 et l'ajustement de la teneur en C24 à 30 à 0,02 à 5 % en masse, de la teneur totale de HMM, HLM et HLL à 0,3 à 18 % en masse et de la teneur totale en HHM et HHL de 0,2 à 14% en masse par rapport aux graisses et aux huiles.

8. Procédé de suppression d'épanouissement d'aliment huileux et de formation de graine, comprenant, l'utilisation de la composition d'huile et de graisse selon l'une quelconque des revendications 1 à 5.
